Europäisches Patentamt

European Patent Office

Office européen des brevets

(11) Numéro de publication: **0 381 578**
**A1**

## (12) DEMANDE DE BREVET EUROPEEN

(21) Numéro de dépôt: **90400254.0**

(51) Int. Cl.⁵: **E05F 15/00**

(22) Date de dépôt: **30.01.90**

(30) Priorité: **31.01.89 FR 8901181**

(43) Date de publication de la demande:
**08.08.90 Bulletin 90/32**

(84) Etats contractants désignés:
**DE ES GB IT SE**

(71) Demandeur: **JAEGER**
**2, rue Baudin**
**F-92303 Levallois-Perret(FR)**

(72) Inventeur: **Chardon, Jérôme**
**2, Rue Montesquieu**
**F-95100 Argenteuil(FR)**

(74) Mandataire: **Martin, Jean-Jacques et al**
**Cabinet REGIMBEAU 26, Avenue Kléber**
**F-75116 Paris(FR)**

(54) **Détecteurs d'obstacle.**

(57) La présente invention concerne un système détecteur d'obstacle comprenant un dispositif détecteur d'obstacle (30) comportant un corps (32) allongé souple et déformable placé entre un support (10) lié à un cadre fixe et un enjoliveur (40) rigide mobile par rapport au cadre.

## DETECTEURS D'OBSTACLE

La présente invention concerne le domaine des dispositifs de sécurité. Elle concerne plus précisément un détecteur d'obstacle apte à détecter la présence d'un obstacle intercalé entre un cadre ou châssis et un organe mobile associé.

La présente invention trouve en particulier application dans la détection d'obstacles intercalés sur le trajet de déplacement de vitres de véhicule automobile entraînées électriquement.

On a déjà proposé de nombreux détecteurs d'obstacle destinés à répondre à la fonction précitée.

De tels détecteurs d'obstacles sont par exemple décrits dans les documents FR-A-2 141 675, FR-A-2 563 565, DE-A-2 246 337, US-A-3 118 984, DE-A-3 424 581, FR-A-2 155 729, FR-A-2 564 971, US-3 154 303, EP-015 393.

Les détecteurs d'obstacle décrits dans les documents FR-A-2 141 675 et FR-2 563 565 comprennent un tube souple déformable étanche contenant un fluide gazeux ou liquide et pourvu en extrémité d'un interrupteur à commande pneumatique ou hydraulique sensible aux déformations du tube.

Les détecteurs d'obstacle décrits dans le document DE-A-2 246 337 comprennent un tube souple déformable associé à des transducteurs d'ultrasons.

Les détecteurs d'obstacle décrits dans les 6 derniers documents précités comprennent un corps tubulaire en matériau souple élastique électriquement isolant qui loge deux bandes ou pistes électriquement conductrices. Au repos, celles-ci sont séparées. Lorsqu'une pression due à un obstacle intercalé est exercée sur le détecteur d'obstacle, la déformation résultante du corps tubulaire porte les deux bandes ou pistes en contact.

Malgré de nombreuses recherches conduites dans le domaine de tels détecteurs d'obstacle n'ont pas encore été développés industriellement. Cela provient notamment du fait que les détecteurs d'obstacle jusqu'ici proposés laissent à désirer sur le plan de l'esthétique, en particulier de l'intégration à la carosserie de véhicule automobile.

Par exemple les solutions proposées dans les documents US-A-3 154 303 et EP-A-0015393 précités, qui consistent à noyer le détecteur d'obstacle dans la coulisse recevant la vitre commandée d'un véhicule automobile ou à envelopper le détecteur d'obstacle par une structure déformable ne donne pas satisfaction.

La présente invention vient améliorer la situation en proposant un système détecteur d'obstacle comprenant un dispositif détecteur d'obstacle comportant un corps allongé souple et déformable placé entre un support lié à un cadre fixe et un enjoliveur rigide mobile par rapport au cadre.

D'autres caractéristiques, buts et avantages de la présente invention apparaîtront à la lecture de la description détaillée qui va suivre, et en regard du dessin annexé donné à titre d'exemple non limitatif sur lequel la figure unique représente schématiquement un mode de réalisation de l'invention.

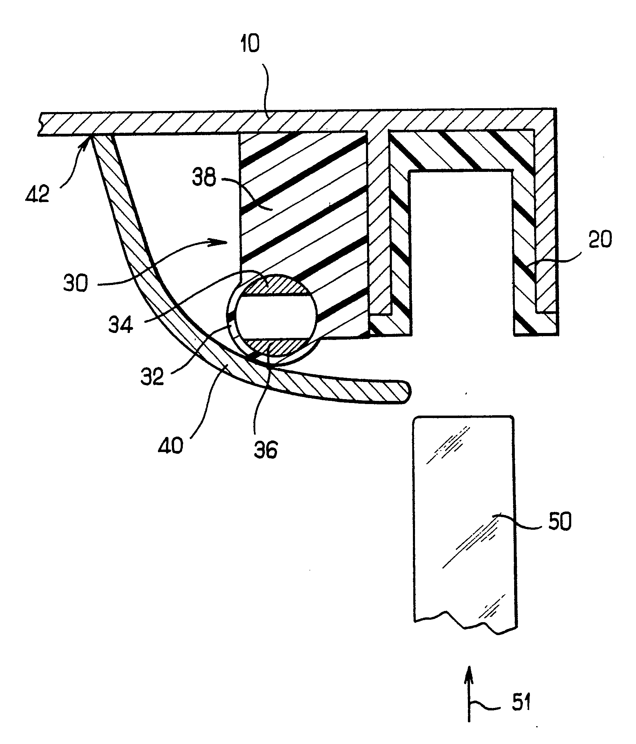

On distingue sur la figure 1 annexée une partie 10 de l'encadrement de fenêtre d'une portière de véhicule automobile, une coulisse 20 supportée par tout moyen classique approprié sur la partie 10 et destinée à recevoir le bord libre supérieur d'une vitre 50 commandée à déplacement comme illustré par la flèche 51 (par exemple par un moteur électrique), un dispositif détecteur d'obstacle 30 et un enjoliveur 40.

Selon la figure annexée le dispositif détecteur d'obstacle 30 comprend un corps tubulaire 32 en matériau souple élastiquement isolant qui loge deux bandes ou pistes électriquement conductrices 34, 36. Ces pistes 34, 36, peuvent par exemple être coextrudées avec le corps 32 et être formées à base du même matériau que ce dernier, moyennant l'apport supplémentaire de charges électriquement conductrices. Au repos, les pistes 34, 36 sont séparées. Le corps tubulaire 32 est fixé sur la partie 10 par l'intermédiaire de son embase 38.

L'enjoliveur 40 recouvre l'ensemble du dispositif 30. L'enjoliveur 40 selon la figure 1 est formé d'un profilé de section incurvée. L'enjoliveur 40 est articulé sur la partie 10 par l'intermédiaire de son arête longitudinale 42. De nombreux moyens connus sont susceptibles d'être retenus pour réaliser cette articulation. Par exemple, l'enjoliveur 40 peut être simplement collé par son arête 42 sur la partie 10. Le cas échéant, il peut également être collé sur le corps tubulaire 32.

L'homme de l'art comprendra aisément que lorsqu'une pression due à un obstacle intercalé sur le trajet de déplacement de la vitre 50 est exercée sur l'enjoliveur 40, cette pression est transmise au détecteur d'obstacle 30; la déformation résultante du corps tubulaire 32 porte les deux pistes 34, 36, en contact et autorisent la génération d'une alerte, par exemple pour inverser le sens de déplacement de la vitre 50 et dégager l'obstacle.

L'enjoliveur 40 permet de dissimuler le dispositif 30 sans réduire la surface utile de la vitre. Il peut en outre servir de levier agissant sur le dispositif 30 afin d'améliorer la fiabilité du système détecteur.

Bien entendu la présente invention n'est pas limitée au mode de réalisation particulier qui vient d'être décrit mais s'étend à toutes variantes conformes à son esprit.

Par exemple, l'enjoliveur 40 peut être guidé à translation sur le cadre 10, et non point à rotation.

Par ailleurs, la structure du dispositif détecteur d'obstacle 30 représentée sur la figure annexée n'est pas limitative. Le dispositif 30 pourra être formé d'un conduit étanche associé à un interrupteur à commande pneumatique ou hydraulique, être formé d'un conduit associé à des transducteurs d'ultrasons, être formé d'un élément piézo sensible, c'est-à-dire dont l'impédance varie en fonction d'une pression appliquée, être formée d'une fibre optique dont le taux de transmission est modifié en cas de déformation, ou encore de capteurs optiques, comme connu de l'homme de l'art.

**Revendications**

1. Système détecteur d'obstacle comprenant un dispositif détecteur d'obstacle (30) comportant un corps (32) allongé souple et déformable placé entre un support (10) lié à un cadre fixe et un enjoliveur (40) rigide mobile par rapport au cadre.

2. Système selon la revendication 1, caractérisé par le fait que l'enjoliveur (40) est monté pivotant par rapport au support (10).

3. Système selon la revendication 1, caractérisé par le fait que l'enjoliveur (40) est monté à translation par rapport au support (10).

4. Système selon l'une des revendications 1 à 3, caractérisé par le fait que l'enjoliveur (40) est collé sur le support (10).

5. Système selon l'une des revendications 1 à 4, caractérisé par le fait que l'enjoliveur (40) est collé sur le corps du détecteur (30).

6. Système selon l'une des revendications 1 à 5, caractérisé par le fait que le dispositif détecteur d'obstacle (30) comprend un corps (32) tubulaire en matériau souple élastique électriquement isolant qui loge deux bandes ou pistes électriquement conductrices (34, 36) séparées au repos.

7. Système selon l'une des revendications 1 à 5, caractérisé par le fait que le dispositif détecteur d'obstacle (30) est choisi dans le groupe formé d'un conduit étanche associé à un interrupteur à commande pneumatique ou hydraulique, ou d'un conduit associé à des transducteurs d'ultrasons, ou d'un capteur piézo sensible, ou d'une fibre optique ou de capteurs optiques.

8. Système selon l'une des revendications 1 à 7, caractérisé par le fait que le support (10) est lié au cadre d'une portière de véhicule automobile.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 089 278 (CHRYSLER U.K. LTD.) <br> * figure 2; page 2, ligne 25 - page 3, ligne 9 * <br> --- | 1,6 | E 05 F 15/00 |
| A | FR-A-2 029 134 (COMPAGNIE INDUSTRIELLE DE MECANISMES) <br> * figure 2; page 2, lignes 24-34 * <br> --- | 1,6 | |
| A | FR-A-2 612 027 (JAEGER) <br> * figure 3; abrégé; page 5, lignes 1-8 * <br> --- | 7,8 | |
| A | US-A-3 830 018 (H. ARAI et al.) <br> * figure 1; colonne 2, lignes 20-38 * <br> ----- | 6 | |

### DOMAINES TECHNIQUES RECHERCHES (Int. Cl.5)

E 05 F
G 08 B

**Le présent rapport a été établi pour toutes les revendications**

| Lieu de la recherche | Date d'achèvement de la recherche | Examinateur |
|---|---|---|
| BERLIN | 12-03-1990 | DANIELIDIS S |